# EUROPEAN PATENT SPECIFICATION

(11) **EP 2 442 974 B1**
(45) Date of publication and mention of the grant of the patent: **21.03.2018**
(21) Application number: 10789057.6
(22) Date of filing: 31.05.2010
(51) Int. Cl.: B32B 5/26, B32B 5/02, B32B 17/12, B32B 19/06, D21G 3/00, B32B 5/12, B32B 17/06, B32B 5/22

(54) **DOCTOR BLADE**
RAKEL
RACLE

(30) Priority: 18.06.2009 FI 20095698
(43) Date of publication of application: 25.04.2012
(73) Proprietor: Exel Composites OYJ, 01510 Vantaa (FI)
(72) Inventor: MIETTINEN, Pentti, 82110 Heinävaara (FI)
(74) Representative: Heinänen Oy Patent Agency
(86) International application number: PCT/FI2010/050438
(87) International publication number: WO 2010/146227

(56) References cited:
- WO-A1-99/12726
- WO-A1-99/12726
- WO-A1-02/092340
- WO-A1-02/092340
- US-A- 4 549 933
- US-A- 4 549 933

## Description

The present invention relates to doctor blade, which comprises a number of layers that are connected to each other, which layers comprise at least a frame layer and, with respect to the frame layer, outer layers on both sides of it, which frame layer is at least partly of mineral fiber, e.g. glass fiber, basalt fiber, and which outer layers comprise carbon fiber.

A doctor blade is a blade with which surplus material is scraped off the surface of a roll, and more particularly which is used in paper machines. A doctor blade is typically manufactured of metal, plastic or composite. High endurance to wear in its wearing surfaces and an otherwise robust structure is demanded of a doctor blade. Composite is a light, but strong, structure so that it is well suited to the manufacture of a doctor blade. Composite can be manufactured either with the pultrusion method or by laminating.

Doctor blades manufactured from composite comprise e.g. a fiber-glass frame and on the surface, or in the immediate vicinity of the surface, carbon fibers, with which the wear resistance of the product is improved. Nowadays a doctor blade is typically made such that the frame material is fiber glass and both of its surfaces comprise carbon fiber. Carbon fiber is, however, relatively expensive, in which case the use of it in those parts of a doctor blade that are not subjected to hard mechanical stress, more particularly to wear, incurs extra costs. In normal carbon fiber fabrics it is also necessary to use relatively thin carbon fibers to achieve a balanced structure. Thinner carbon fibers are relatively more expensive than thicker carbon fibers, so that it would be advantageous to use thicker carbon fibers.

US 4549933 A discloses a doctor blade which comprises a number of layers that are connected to each other, which layers comprise at least a frame layer and, with respect to the frame layer, outer layers on both sides of it, which frame layer is at least partly of mineral fiber and which outer layers comprise carbon fiber. This document represents the closest prior art.

The purpose of this invention is to achieve a new type of doctor blade, which is more inexpensive to manufacture than before and which is still sufficiently strong and durable. The doctor blade according to the invention is characterized in that the outer layer comprises three or more layers, of which at least one is a carbon-fiber layer, the direction of which is transverse to the longitudinal direction of the doctor blade, and in that the layer in direct connection with this is at an angle a with respect to the carbon-fiber layer, where 0°<α<90° and -90°<α<0°.

One preferred embodiment of the doctor blade according to the invention is characterized in that the layer/layers in connection with the transverse carbon-fiber layer are mineral-fiber layers.

One preferred embodiment of the doctor blade according to the invention is characterized in that the layer/layers in connection with a transverse carbon-fiber layer are carbon-fiber layers.

Yet another preferred embodiment of the doctor blade according to the invention is characterized in that the outer layer is formed from a middle layer, which is carbon fiber (90°), and from mineral-fiber layers above and below it, in which case the angle of the upper mineral layer with respect to the carbon layer is the opposite number of the angle between the lower mineral layer and the carbon layer.

Yet another preferred embodiment of the doctor blade according to the invention is characterized in that the outer layer is formed from a number of layers, of which the outermost layer is carbon fiber (90°), and from mineral-fiber layers below it, in which case the angle of the lower mineral-fiber layers with respect to the carbon layer is the opposite number of the angle between the lower mineral layer and the carbon layer.

The doctor blade according to the invention is more easily adaptive (to reeling in the longitudinal direction) and more rigid in the lateral direction (the wear direction of scraping). The doctor blade is durable in its properties, because the carbon is mainly only in the direction of wear (90°). One advantage is that the structure enables the use of thicker carbon fibers than earlier.

In the following, the invention will be described in more detail by the aid of some preferred embodiments with reference to the attached drawings, wherein
Fig. 1 presents a side view of the strongly exaggerated basic construction of the doctor blade according to the invention.
Fig. 2 presents in principle a carbon-fiber-mineral-fiber multiaxial layer according to the invention.
Fig. 3 presents in principle a second implementation of the carbon-mineral-fiber layer according to the invention.

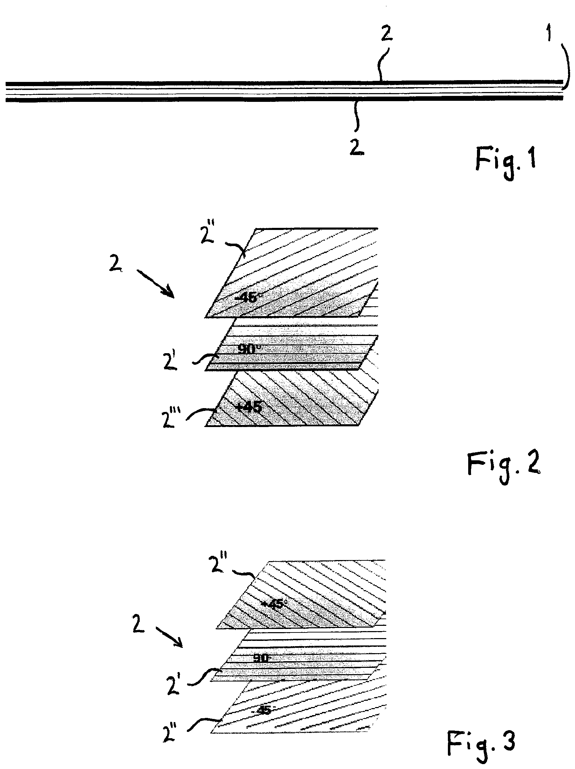

In Fig. 1 the doctor blade comprises, in principle, three layers. In the middle is a so-called frame layer 1, which is preferably a mineral-fiber layer, such as a glass-fiber layer or a basalt-fiber layer. How this layer is formed, and what other substances it possibly comprises, however, is not essential from the viewpoint of the invention. On both sides of this frame layer 1, or at least on one side, is a so-called outer layer 2. When a so-called outer layer is on both sides, they are therefore disposed symmetrically in relation to the thickness of the material and in this case there are two, four, six or another even amount of them. The outer layer 2 is in this embodiment a so-called carbon-fiber-mineral-fiber multiaxial layer. In the final product this layer is on the surface or at least near the surface. The invention relates specifically to this layer. Also an auxiliary layer, which is other than carbon fabric, can be on the very surface. The thickness of the material is 1-3 mm, preferably 1.5-2.5 mm. Figs. 2 and 3 present in more detail the structure of this so-called outer layer 2, i.e. carbon-mineral-fiber layer. It is also possible that more than one of the layers (2', 2", 2''') is carbon fiber. In any case, it is important that the transverse layer is carbon fiber (90°).

Fig. 2 thus presents a carbon-fiber-mineral-fiber layer (outer layer 2) of one embodiment of the invention. It comprises a lateral (90°) middle layer 2', which is at least mainly carbon fiber. Above it at a -45° angle with respect to it is a mineral-fiber layer 2" and below it correspondingly at a +45° angle is a mineral-fiber layer 2"'. The mineral fibers can be e.g. glass fiber or basalt fiber. The mineral-fiber layers function mainly as a bearing and supporting layer for the carbon-fiber layer. The carbon-fiber layer, for its part, functions in the structure as a layer that resists wear.

What is essential in the carbon-mineral-fiber layer according to the invention is it multiaxial nature. Normally the fibers of a fabric are at an angle of 90° to each other, but here the superimposed layers are e.g. at an angle of 45° to each other. The angle can be other than 45°. What is essential is that the angles are opposite numbers, e.g. +45°, -45° or +35°, -35°. In theory the angle is more than 0°, but less than 90° or correspondingly less than 0°, but more than -90°.

What is essential, however, is that the carbon-fiber layer is in the lateral direction (90°), so that the doctor blade withstands wear. Of course, this carbon layer can comprise .g. two superimposed carbon layers, which are at a small symmetrical angle to each other such that the average direction of the carbon is however the aforementioned 90°. Fig. 3 presents an inverse solution compared to the embodiment of Fig. 2. In it, therefore, the topmost mineral-fiber layer 2" layer is +45° and the bottommost 2"' is -45°.

One preferred embodiment of the doctor blade thus comprises two carbon-fiber-mineral-fiber multiaxial layers, which are in the doctor blade symmetrically in relation to thickness. The very surface can also be an auxiliary layer, i.e. other than carbon fiber.

Different types of resins (typically epoxies or other such structural resins) can be used as a matrix in the doctor blade. It is obvious to the person skilled in the art that the invention is not limited to the embodiments presented above, but that it can be varied within the scope of the claims presented below. The material according to the invention can be manufactured e.g. in a pultrusion machine or in a laminating machine.

## Claims

1. Doctor blade, which comprises a number of layers (1, 2) that are connected to each other, which layers comprise at least a frame layer (1) and, with respect to the frame layer, outer layers (2) on both sides of it, which frame layer (1) is at least partly of mineral fiber, e.g. glass fiber, basalt fiber, and which outer layers (2) comprise carbon fiber, **characterized in that** the outer layer (2) comprises three or more layers (2', 2", 2'''), of which at least one is a carbon-fiber layer (2'), the direction of which is transverse to the longitudinal direction of the doctor blade, and **in that** the layer (2", 2''') in direct connection with this is at an angle a with respect to the carbon-fiber layer, where 0º<α<90º and -90º<α<0º.

2. Doctor blade according to claim 1, **characterized in that** the layers (2", 2''') in connection with the transverse carbon-fiber layer (2') are mineral-fiber layers.

3. Doctor blade according to claim 1, **characterized in that** the layers (2", 2''') in connection with the transverse carbon-fiber layer (2') are carbon-fiber layers.

4. Doctor blade according to claim 2, **characterized in that** the outer layer (2) is formed from a middle layer (2'), which is carbon fiber, and from mineral-fiber layers (2", 2''') above and below it, in which case the angle of the upper mineral layer (2") with respect to the carbon layer (2') is the opposite number of the angle between the lower mineral layer (2''') and the carbon layer (2').

5. Doctor blade according to claim 2, **characterized in that** the outer layer (2) is formed from a number of layers (2'), of which the outermost layer is carbon fiber, and from mineral-fiber layers (2", 2''') below it, in which case the angle of the upper mineral-fiber layer (2") with respect to the carbon layer (2') is the opposite number of the angle between the lower mineral-fiber layer (2''') and the carbon layer (2').

6. Doctor blade according to claim 3, **characterized in that** the angle between the upper mineral layer (2") and the carbon-fiber layer (2') is -45º and the angle between the lower mineral layer (2''') and the carbon layer is +45º.

7. Doctor blade according to claim 3, **characterized in that** the angle between the upper mineral layer (2") and the carbon-fiber layer (2') is +45º and the angle between the lower mineral layer (2''') and the carbon layer is -45º.

## Patentansprüche

1. **Rakel** mit mehreren Schichten (1, 2), die miteinander verbunden sind, die Schichten umfassen zumindest eine Gerüstschicht (1) und, bezogen auf die Gerüstschicht, Außenschichten (2) auf beiden Seiten davon, wobei die Gerüstschicht (1) zumindest teilweise aus Mineralfaser, z.B. Glasfaser, Basaltfaser, besteht, und wobei die Außenschichten (2) Kohlenstofffaser umfassen, **dadurch gekennzeichnet, dass** die Außenschicht (2) drei oder mehr Schichten (2', 2", 2''') umfasst, wovon zumindest eine eine Kohlenstofffaserschicht (2') ist, dessen Richtung transversal zu der longitudinalen Richtung der Rakel ist, und dadurch, dass die Schicht (2", 2'''), die mit dieser in direktem Kontakt steht, einen Winkel α zu der Kohlenstofffaserschicht aufweist, wobei 0° < α <90° und -90° < α<0°.

2. Rakel nach Anspruch 1, **dadurch gekennzeichnet, dass** die Schichten (2", 2'''), die mit der transversalen Kohlenstofffaserschicht (2') verbunden sind, Mineralfaserschichten sind.

3. Rakel nach Anspruch 1, **dadurch gekennzeichnet, dass** die Schichten (2", 2'''), die mit der transversalen Kohlenstofffaserschicht (2') verbunden sind, Kohlenstofffaserschichten sind.

4. Rakel nach Anspruch 2, **dadurch gekennzeichnet, dass** die Außenschicht (2) aus einer Mittelschicht (2'), die Kohlenstofffaser ist, und aus Mineralfaserschichten (2", 2''') darüber und darunter gebildet ist, wobei der Winkel der oberen Mineralschicht (2") bezogen auf die Kohlenstoffschicht (2') die Gegenzahl des Winkels zwischen der unteren Mineralschicht (2''') und der Kohlenstoffschicht (2') ist.

5. Rakel nach Anspruch 2, **dadurch gekennzeichnet, dass** die Außenschicht (2) aus mehreren Schichten (2') gebildet ist, wovon die äußerste Schicht Kohlenstofffaser ist, und aus Mineralfaserschichten (2", 2''') darunter, wobei der Winkel der oberen Mineralfaserschicht (2") bezogen auf die Kohlenstoffschicht (2') die Gegenzahl des Winkels zwischen der unteren Mineralfaserschicht (2''') und der Kohlenstoffschicht (2') ist.

6. Rakel nach Anspruch 3, **dadurch gekennzeichnet, dass** der Winkel zwischen der oberen Mineralschicht (2") und der Kohlenstofffaserschicht (2') -45° beträgt und der Winkel zwischen der unteren Mineralschicht (2''') und der Kohlenstoffschicht +45° beträgt.

7. Rakel nach Anspruch 3, **dadurch gekennzeichnet, dass** der Winkel zwischen der oberen Mineralschicht (2") und der Kohlenstofffaserschicht (2') +45° beträgt und der Winkel zwischen der unteren Mineralschicht (2''') und der Kohlenstoffschicht -45° beträgt.

## Revendications

1. Racle qui comprend un certain nombre de couches (1, 2) reliées entre elles, lesquelles couches comprennent au moins une couche d'armature (1) et, par rapport à la couche d'armature, des couches extérieures (2), des deux côtés, laquelle couche d'armature (1) est au moins en partie en fibres minérales, par exemple en fibres de verre, en fibres de basalte, et lesquelles couches extérieures (2) contiennent des fibres de carbone, **caractérisée en ce que** la couche extérieure (2) comprend trois couches (2', 2", 2'''), ou plus, dont une au moins est une couche de fibres de carbone (2') dont le sens est transversal par rapport au sens longitudinal de la racle, et **en ce que** la couche (2", 2''') qui est reliée directement à ladite couche (2') définit un angle α par rapport à la couche de fibres de carbones : 0° < α < 90° et -90° < α < 0°.

2. Racle selon la revendication 1, **caractérisée en ce que** les couches (2", 2''') qui sont reliées à la couche de fibres de carbone transversale (2') sont des couches de fibres minérales.

3. Racle selon la revendication 1, **caractérisée en ce que** les couches (2", 2''') qui sont reliées à la couche de fibres de carbone transversale (2') sont des couches de fibres de carbone.

4. Racle selon la revendication 2, **caractérisée en ce que** la couche extérieure (2) se compose d'une couche centrale (2') qui est en fibres de carbone, et, au-dessus et au-dessous de celle-ci, de couches de fibres minérales (2", 2'''), auquel cas l'angle de la couche minérale supérieure (2") par rapport à la couche de carbone (2') a une valeur opposée à l'angle entre la couche minérale inférieure (2''') et la couche de carbone (2').

5. Racle selon la revendication 2, **caractérisée en ce que** la couche extérieure (2) se compose d'un certain nombre de couches (2') parmi lesquelles la couche extérieure est en fibres de carbone, et, au-dessous de celle-ci, de couches de fibres minérales (2", 2'''), auquel cas l'angle de la couche de fibres minérales supérieure (2") par rapport à la couche de carbone (2') a une valeur opposée à l'angle entre la couche de fibres minérales inférieure (2''') et la couche de carbone (2').

6. Racle selon la revendication 3, **caractérisée en ce que** l'angle entre la couche minérale supérieure (2") et la couche de fibres de carbone (2') est de -45°, et l'angle entre la couche minérale inférieure (2''') et la couche de fibres de carbone est de +45°.

7. Racle selon la revendication 3, **caractérisée en ce que** l'angle entre la couche minérale supérieure (2") et la couche de fibres de carbone (2') est de +45°, et l'angle entre la couche minérale inférieure (2''') et la couche de fibres de carbone est de -45°.
